Europäisches Patentamt

European Patent Office

Office européen des brevets

(19)

(11) Numéro de publication: **0 107 567**
A1

(12) **DEMANDE DE BREVET EUROPEEN**

(21) Numéro de dépôt: 83401970.5

(22) Date de dépôt: 07.10.83

(51) Int. Cl.³: **G 11 B 23/28, H 04 N 5/91**

(30) Priorité: 08.10.82 FR 8216903

(43) Date de publication de la demande: 02.05.84
Bulletin 84/18

(84) Etats contractants désignés: **AT BE CH DE GB IT LI LU NL SE**

(71) Demandeur: **THOMSON-CSF, 173, Boulevard Haussmann, F-75379 Paris Cedex 08 (FR)**

(72) Inventeur: **Surjon, Claude, THOMSON-CSF SCPI 173, bld Haussmann, F-75379 Paris Cedex 08 (FR)**
Inventeur: **Jerome, Jean-Claude, THOMSON-CSF SCPI 173, bld Haussmann, F-75379 Paris Cedex 08 (FR)**

(74) Mandataire: **Turlèque, Clotilde et al, THOMSON-CSF SCPI 173, Bld Haussmann, F-75379 Paris Cedex 08 (FR)**

(54) Procédé de protection d'une séquence d'images vidéo contre une utilisation frauduleuse, et dispositifs pour la mise en oeuvre de ce procédé.

(57) L'invention est destinée à protéger les droits de propriété artistique attachés à des images vidéo diffusées par voies hertziennes ou sous la forme de vidéocassettes.

Un dispositif de duplication de vidéocassettes pour la mise en oeuvre d'un procédé de protection comporte une source vidéo (1) fournissant une séquence d'image vidéo à un ensemble d'enregistreurs vidéo (6) par l'intermédiaire d'un dispositif (2) d'incrustation d'images recevant d'un générateur de caractères (3) un signal vidéo permettant d'incruster sur certaines images une marque identifiant la société de duplication des vidéocassettes. Cette marque a de petites dimensions par rapport aux dimensions d'une image, elle a une position variable et aléatoire dans les images marquées, et l'intervalle de temps entre les images marquées est choisi aléatoirement.

Application à la diffusion hertzienne d'images vidéo et à la duplication de vidéocassettes.

1

Procédé de protection d'une séquence d'images vidéo contre une
utilisation frauduleuse et dispositifs pour la mise en oeuvre de ce procédé

Le procédé selon l'invention concerne la protection des droits de propriété artistique attachés à une séquence d'images vidéo. Dans un premier cas, un producteur de films loue à titre onéreux une copie d'un film à une société de diffusion d'émissions de télévision. Un fraudeur peut enregistrer ces images pendant leur diffusion puis en faire une utilisation publique et commerciale au mépris des droits du producteur du film. Cette utilisation peut être l'enregistrement et la vente de vidéocassettes ou bien la diffusion de l'enregistrement par un émetteur de télévision.

Dans un deuxième cas, le producteur d'un film vend les droits de reproduction de ce film à une société de duplication et de vente de vidéocassettes. Un fraudeur peut faire une utilisation publique et commerciale d'une de ces cassettes au mépris des droits de la société de duplication et de vente des vidéocassettes, par exemple en diffusant les images de ce film par un émetteur de télévision.

L'objet de l'invention est de permettre d'identifier la personne morale ou physique possédant des droits sur des images vidéo pour lui permettre de reconnaître des images utilisées sans son consentement et déceler ainsi toute fraude.

Selon l'invention, un procédé de protection d'une séquence d'images vidéo contre une utilisation frauduleuse, est caractérisé en ce qu'il consiste à superposer à un ensemble d'images de la séquence, une marque visible et aisément identifiable, de petites dimensions par rapport aux dimensions d'une image, et dont la position varie aléatoirement ; les images de cet ensemble étant choisies aléatoirement dans la séquence d'images.

L'invention concerne aussi un dispositif de diffusion d'émissions de télévision et un dispositif de duplication de vidéocassettes pour la mise en oeuvre de ce procédé de protection.

L'invention sera mieux comprise et d'autres détails apparaîtront à l'aide de la description ci-dessous et des figures l'accompagnant :

- la figure 1 représente le schéma synoptique d'un exemple de réalisation d'un dispositif de production d'émissions de télévision pour la mise en oeuvre du procédé selon l'invention ;

- la figure 2 représente le schéma synoptique d'un exemple de réalisation d'un dispositif de duplication de vidéocassettes selon l'invention ;

- la figure 3 représente un exemple d'image utilisée dans la mise en oeuvre du procédé selon l'invention ;

- la figure 4 représente le schéma synoptique plus détaillé d'une partie du dispositif de la figure 2.

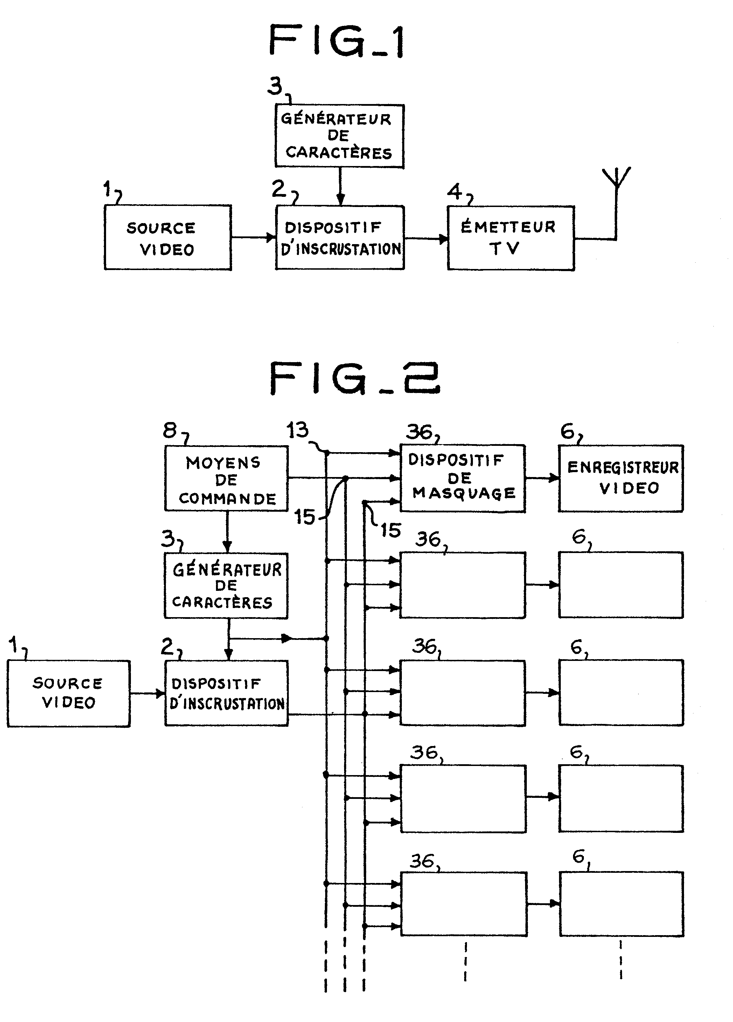

Sur la figure 1 un dispositif de production d'émissions de télévision pour la mise en oeuvre du procédé selon l'invention est constitué d'une source de signal vidéo 1 reliée à un émetteur de télévision 4 par l'intermédiaire d'un dispositif classique d'incrustation 2 incrustant dans l'image vidéo des caractères et des symboles générés par un générateur de caractères 3, de type classique. Le générateur de caractères 3 génère par exemple un sigle composé de trois lettres identifiant la société propriétaire du dispositif de production d'émissions de télévision. Ce sigle a des dimensions très petites par rapport aux dimensions d'une image pour ne pas être gênant, et est superposé à l'image par addition d'un signal vidéo au signal vidéo propre à l'image. Ainsi la marque obtenue est visible sans être gênante. Cette marque est générée à des instants aléatoires pendant la transmission de la séquence d'images à protéger, et n'est présente que sur une ou quelques trames d'image, à chacun de ces instants.

Le dispositif d'incrustation 2 et le générateur de caractères 3 peuvent être constitués par un synthétiseur d'écriture utilisé classiquement pour titrer les émissions de télévision, par exemple le synthétiseur TTV 3301 commercialisé par la Société THOMSON-CSF. Un tel synthétiseur possède des mémoires permettant de stocker plusieurs pages d'écriture, il est donc possible de stocker plusieurs pages comportant chacune un sigle situé dans diverses positions sur les bords de l'image. La sélection et l'incrustation d'une de ces pages sont commandées manuellement par un opérateur, à des instants aléatoires. Comme il est expliqué plus loin pour un autre dispositif mettant en oeuvre le procédé selon l'invention,

0107567

3

l'utilisation d'un synthétiseur d'écriture peut être rendue plus aisée en automatisant la commande de sélection et d'incrustation des pages.

Si un fraudeur reçoit et enregistre la séquence d'images il ne peut pas en faire un usage public et commercial sans que le propriétaire de la séquence puisse s'apercevoir qu'il utilise des images pour lesquelles aucun droit d'exploitation ne lui a été concédé. Il est très difficile de supprimer le marquage ainsi réalisé. L'incrustation d'un rectangle gris couvrant et masquant la marque sur chacune des images marquées représente un travail très long et très considérable. La suppression complète des images marquées est moins longue mais a pour inconvénient très important de provoquer des interruptions du signal audio qui est en général indissociable de la séquence d'images. Ce marquage peut donc être considéré comme pratiquement impossible à neutraliser en pratique.

Le procédé de protection selon l'invention peut être appliqué aussi aux images vidéo mises à la disposition du public sous la forme de vidéocassettes. La figure 2 représente un schéma synoptique d'un exemple de réalisation d'un dispositif de duplication de vidéocassettes mettant en oeuvre ce procédé de protection. Ce dispositif comporte une source vidéo 1, un dispositif d'incrustation 2, un générateur de caractères 3, des moyens de commande 8, un ensemble de dispositifs de masquage 5, et un ensemble d'enregistreurs vidéo 6 permettant chacun d'enregistrer une vidéocassette. Le dispositif d'incrustation 2 possède une première entrée reliée à la source vidéo 1 et une deuxième entrée reliée à une sortie du générateur de caractères 3. Le générateur de caractères 3 possède une entrée reliée à une première sortie des moyens de commande 8. Chaque enregistreur vidéo 6 est respectivement couplé à un dispositif de masquage 5. Chaque dispositif de masquage 5 possède une première borne d'entrée 13 reliée à la sortie du générateur de caractères 3, une deuxième borne d'entrée 15 reliée à une deuxième sortie des moyens de commande 8, une troisième borne d'entrée 14 reliée à une sortie du dispositif d'incrustation 2, et une borne de sortie 36 reliée à une entrée d'un enregistreur vidéo 6.

Le dispositif d'incrustation 2 et le générateur de caractères 3 permettent de marquer certaines images de la séquence enregistrée, de la façon décrite précédemment. D'autre part, les dispositifs de masquage 5 et le générateur de caractères 3 ont une fonction supplémentaire, ils permettent d'enregistrer au début de la séquence d'images au moins une image contenant des informations d'identification du lot constitué par toutes les vidéocassettes enregistrées simultanément, et des informations d'identification de l'enregistreur 6 ayant enregistré chaque vidéocassette.

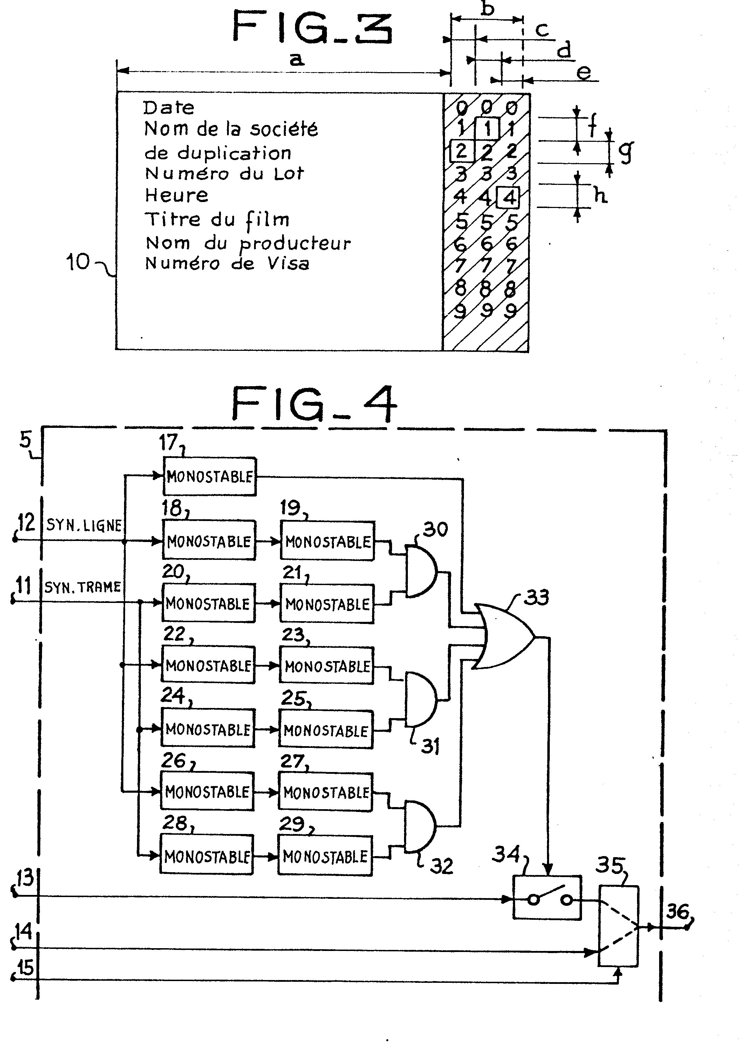

La figure 3 représente un exemple d'une telle image, 10, elle comporte l'indication de la date, le nom de la société de duplication, un numéro désignant le lot, de l'heure, le titre du film ayant servi de source d'images, le nom du producteur de ce film et le numéro de visa de censure. En outre, cette image comporte trois colonnes de chiffres allant de 0 à 9, ces trois colonnes sont situées dans une bande verticale à droite de l'image. Chacun des dispositifs de masquage 5 réalise un masquage de l'ensemble de ces chiffres sauf trois chiffres, différents pour chacun des enregistreurs vidéo 6, afin de constituer un numéro d'identification. Ces trois chiffres sont fixes et sont propres à chaque enregistreur 6, les dispositifs de masquage 5 sont donc d'une réalisation simple, décrite plus loin. Le numéro du lot de vidéocassettes et le numéro individuel de l'enregistreur vidéo permettent de déterminer les cassettes appartenant à un lot où tous les enregistrements sont défectueux, ou permettent de déterminer un enregistreur 6 ayant effectué un enregistrement défectueux.

La figure 4 représente le schéma synoptique d'un exemple de réalisation d'un dispositif de masquage 5. Un dispositif de masquage 5 comporte 13 monostables 17 à 29, trois portes ET à deux entrées 30, 31, et 32, une porte OU 33 à quatre entrées, un dispositif de commutation 34, et un multiplexeur 35 à deux entrées et une sortie. La sortie du multiplexeur 35 constitue la sortie du dispositif 5 et est reliée à la borne de sortie 36. Une borne d'entrée 11 reçoit un signal de synchronisation trame et une borne d'entrée 12 reçoit un signal de synchronisation ligne fourni par un dispositif de synchronisation interne à la source vidéo 1. Les monostables 18 à 29 sont montés par série de deux, 18 et 19, 20 et 21, 22 et 23, 24 et 25, 26 et 27, 28 et 29. Dans chaque série de deux monostables le premier a pour rôle de procurer un retard et le deuxième de générer une impulsion de durée prédéterminée déclenchée à la fin de la durée du retard procuré par le premier monostable. Les monostables possèdent chacun une entrée de déclenchement, celle des monostables 20, 24, et 28 est reliée à la borne d'entrée 11, et celle des monostables 17, 18, 22, et 26, est reliée à la borne d'entrée 12. La sortie du monostable 17 est reliée à une première entrée de la porte OU 33, les sorties des monostables 19 et 21 sont reliées respectivement à la première et à la seconde entrée de la porte ET 30, les sorties des monostables 23 et 25 sont reliées respectivement à la première et à la seconde entrée de la porte ET 31, et les sorties des monostables 27 et 29 sont reliées respectivement à la première et à la seconde entrée de la porte ET 32. Les sorties des portes ET 30, 31, 32 sont reliées respectivement à la deuxième, la troisième et la quatrième entrée de la porte OU 33. La sortie de la porte OU 33 est reliée à une entrée de commande du dispositif de commutation 34. Le dispositif de commutation possède une entrée reliée à la borne d'entrée 13 et une sortie reliée à une première entrée du multiplexeur 35. Une deuxième entrée du multiplexeur 35 est reliée à la borne d'entrée 14, et une entrée de commande est reliée à la borne d'entrée 15.

La figure 3 permet de comprendre le fonctionnement du dispositif de masquage 5. Le masquage laisse une fenêtre de largeur $a$ disponible pour les informations communes à tous les enregistrements effectués à partir de la même source vidéo 1. Le masquage n'affecte qu'une bande verticale de largeur b correspondant à la largeur totale des trois colonnes de chiffres et de hauteur égale à la hauteur de l'image. Pour faire apparaître le chiffre des centaines du numéro d'identification de l'enregistreur une fenêtre de largeur $c$ et de hauteur $g$ est ménagée dans ce masquage. De même pour faire apparaître le chiffre des dizaines et le chiffre des unités deux fenêtres respectivement de largeurs $d$ et $e$, et de hauteurs $f$ et $h$, sont aussi prévues.

Le fonctionnement du dispositif représenté sur la figure 2 comporte deux phases distinctes, l'enregistrement d'une page de présentation au début de la séquence d'images d'une part, et le marquage de certaines images d'autre part. Pendant l'enregistrement de la page de présentation les moyens de commande 8 génèrent sur leur première sortie un signal logique validant chacun des dispositifs de masquage 5 en commutant le multiplexeur 35 de façon à relier la sortie du dispositif de commutation 34 à la borne de sortie 36. Le dispositif de commutation 34 permet de masquer certaines parties de la page de présentation en interrompant la transmission du signal vidéo fourni par le générateur de caractères 3 sur la borne d'entrée 13 du dispositif de masquage 5. Le dispositif de commutation 34 transmet le signal vidéo appliqué à son entrée lorsque son entrée de commande reçoit un signal logique de valeur 1 fourni par la sortie de la porte OU 33. Au début de chaque ligne le signal de synchronisation ligne appliqué à la borne d'entrée 12 déclenche le monostable 17 qui fournit une impulsion au niveau logique 1 pendant une durée correspondant au balayage de la largeur $a$ d'une ligne, ce niveau logique 1 fait passer la sortie de la porte OU 33 au niveau 1 pour permettre la transmission du signal vidéo par le dispositif 34. Pendant la durée correspondant au balayage de la largeur $b$ à l'extrémité droite de chaque ligne, la transmission du signal vidéo est interrompue ce qui provoque un masquage des trois colonnes de chiffres. Les monostables 18 à 29 permettent de démasquer trois fenêtres dans la bande verticale, située à droite de l'image et de largeur $b$, qui est masquée. Chaque signal de synchronisation ligne déclenche le monostable 18 pour déclencher avec un retard fixé le monostable 19, ce dernier fournit une impulsion dont la durée correspond à la largeur de balayage $c$ de la première colonne de chiffres. Chaque signal de synchronisation de trame déclenche le monostable 20 qui déclenche avec un retard fixé le monostable 21 pour fournir une impulsion dont la durée correspond à la hauteur $g$ du balayage pour un chiffre de la première colonne. La porte ET 30 fournit sur sa sortie un signal logique de valeur 1 pendant les intervalles de temps où est balayée la fenêtre correspondant au chiffre des centaines. Ce signal logique de niveau 1 provoque le passage au niveau 1 de la sortie de la porte OU 33 et la validation du dispositif de commutation 34. De la même façon les monostables 22, 23, 24 et 25, et la porte ET 31 permettent de démasquer une fenêtre correspondant à un chiffre de la deuxième colonne, chiffre des dizaines ; et les monostables 26, 27, 28, et 29, et la porte ET 32 permettent de démasquer une fenêtre correspondant à un chiffre de la troisième colonne, chiffre des unités. La durée du retard procuré par les monostables 20, 24, et 28 détermine la position verticale de chacune des trois fenêtres, leur réglage permet donc le choix du numéro affecté à chacun des enregistreurs 6. Les monostables 17, 18, 19, 22, 23, 26, et 27, qui correspondent aux largeurs de balayage a, c, d, et e peuvent être communs à tous les dispositifs de masquage 5. D'autre part s'il y a plusieurs centaines d'enregistreurs 6 les monostables 20 et 21 peuvent être communs pour un groupe de 100 enregistreurs puisque ces monostables déterminent le balayage de largeur g correspondant au chiffre des centaines du numéro d'identification. Les monostables 24 et 25 peuvent être communs pour un groupe de dix dispositifs de masquage 5 correspondant à dix enregistreurs vidéo 6 ayant le même chiffre des dizaines dans leur numéro d'identification. Les monostables 28 et 29 peuvent être communs à tous les dispositifs de masquage 5 correspondant à des enregistreurs vidéo 6 ayant dans leur numéro d'identification le même chiffre des unités. Il est à la portée de l'homme de l'art de remplacer les monostables par des compteurs numériques.

Après l'enregistrement de la page de présentation les moyens de commande 8 génèrent un signal logique sur leur première sortie pour commuter le multiplexeur 35 dans sa deuxième position afin de mettre hors service le dispositif de masquage 5 et transmettre sans modification le signal vidéo fourni par le dispositif d'incrustation 2 sur la borne d'entrée 14. Les moyens de commande 8 fournissent sur leur deuxième sortie des signaux sélectionnant dans le générateur de caractères 3 une page comportant une marque constituée, par exemple, d'un sigle de trois lettres situé sur un des bords de l'image. Le générateur de caractères 3 stocke dans une mémoire, en plus de la page de présentation, plusieurs pages comportant uniquement une marque. Le choix d'une de ces pages est réalisé automatiquement dans un ordre aléatoire et à des instants aléatoires par les moyens de commande 8. La durée d'apparition de la marque est fixe, elle correspond à une ou plusieurs trames d'images. Un dispositif fournissant une adresse aléatoire ou pseudo-aléatoire sélectionne une des pages de marquage, et fournit à des instants aléatoires un signal commandant l'apparition de la page de marquage en surimpression avec l'image vidéo fournie par la source vidéo 1.

Un synthétiseur d'écriture tel que le modèle TTV 3301 commercialisé par la Société THOMSON-CSF peut constituer le générateur 3 et le dispositif d'incrustation 2. Il est à la portée de l'homme de l'art de réaliser des moyens de commande 8 remplissant les fonctions décrites ci-dessus.

Un générateur numérique d'adresses pseudo-aléatoires peut être réalisé par exemple selon la description fournie par Lawrence R. Rabiner et Bernard Gold dans THEORY AND APPLICATION OF DIGITAL SIGNAL PROCESSING éditeur PRENTICE-HALL, INC. 1975, pages 565 à 571.

La portée de l'invention ne se limite pas aux exemples de réalisation décrits ci-dessus, il est notamment possible à l'homme de l'art de rajouter d'autres informations dans l'image ou les images précédant la séquence, ou de présenter différemment le numéro d'identification des enregistreurs. Il est notamment possible de remplacer les dispositifs de masquage 5 par des générateurs de caractères simplifiés générant chacun trois chiffres fixés constituant un numéro propre à un enregistreur 6 ; ou de générer le marquage par un générateur de caractères différent de celui utilisé pour la page de présentation, par exemple en utilisant un générateur simplifié fournissant un marquage fixe programmé en mémoire morte. Il est possible de remplacer le générateur de caractères par une autre source vidéo telle qu'une caméra de titrage ou un analyseur d'images fixes.

Il est possible aussi de n'utiliser qu'une seule page pour contenir la page de présentation et des marques situées en divers positions. Un dispositif de masquage commun pour tous les enregistreurs est alors intercalé entre le générateur de caractères (3) et le dispositif d'incrustation (2). Ce dispositif de masquage supplémentaire, sous l'action d'une commande générée par les moyens de commande 8, masque toute la page sauf une des marques. Le choix d'une des marques est réalisée aléatoirement en fonction du temps par les moyens 8, et se traduit par le déplacement d'une fenêtre de démasquage. La réalisation d'un tel dispositif de masquage supplémentaire peut être analogue à celle du dispositif 5 de la figure 4. Chaque position de la marque correspond a une fenêtre donc correspond à quatre monostables. Il est à la portée de l'homme de l'art de réaliser un circuit logique permettant de sélectionner une parmi plusieurs fenêtres.

## REVENDICATIONS

1. Procédé de protection d'une séquence d'images vidéo contre une utilisation frauduleuse, caractérisé en ce qu'il consiste à superposer à un ensemble d'images de la séquence, une marque visible et aisément identifiable, de petites dimensions par rapport aux dimensions d'une image, et dont la position varie aléatoirement ; les images de cet ensemble étant choisies aléatoirement dans la séquence d'images.

2. Procédé selon la revendication 1, caractérisé en ce que la marque visible est constituée de caractères ou symboles générés par un synthétiseur d'écriture (2, 3) pour titrage d'émissions de télévision, le synthétiseur stockant dans une mémoire plusieurs pages contenant la marque en différentes positions.

3. Procédé selon la revendication 2, appliqué à la protection d'images vidéo enregistrées et stockées dans des vidéocassettes, caractérisé en ce qu'il consiste en outre à faire précéder la séquence d'images, d'au moins une image (10) contenant des informations qui, après un masquage partiel différent pour chaque vidéocassette, permettent d'identifier individuellement chacune des vidéocassettes d'un lot de vidéocassettes enregistrées simultanément.

4. Procédé selon la revendication 3, caractérisé en ce que l'image (10) contenant des informations permettant d'identifier individuellement chacune des videocassettes contient en outre des marques situées en différentes positions sur ses bords ; en ce qu'il consiste à enregistrer cette image en tête de séquence, puis à la masquer de façon à laisser apparaître aléatoirement au cours du temps une de ces marques choisie aléatoirement ; et en ce qu'il consiste à superposer cette image masquée à l'ensemble des images de la séquence.

5. Dispositif de production d'émissions de télévision, pour la mise en oeuvre du procédé selon la revendication 2, comportant une source de signaux vidéo (1) et un émetteur de télévision (4), caractérisé en ce qu'il comporte un dispositif (2) d'incrustation d'images ayant une première entrée reliée à une sortie de la source vidéo (1) et une sortie reliée à une entrée de l'émetteur (4), et un générateur de caractères (3) pour le titrage d'émissions de télévision, ayant une sortie reliée à une deuxième entrée du dispositif d'incrustation (2), pour lui fournir un signal vidéo correspondant à l'incrustation d'une marque constituée de caractères ou de symboles.

6. Dispositif de duplication de vidéocassettes, pour la mise en oeuvre du procédé selon la revendication 1, comportant une source de signal vidéo (1) couplée à une pluralité d'enregistreurs de vidéocassettes (6), caractérisé en ce que la source est reliée à tous les enregistreurs (6) par un dispositif (2) d'incrustation d'images ayant une entrée couplée à une sortie d'un générateur de caractères (3) lui fournissant un signal vidéo correspondant à l'inscrustation d'une marque constituée de caractères ou de symboles.

7. Dispositif selon la revendication 6, pour la mise en oeuvre du procédé selon la revendication 3, caractérisé en ce que chaque enregistreur (6) est couplé au dispositif d'incrustation (2) par un dispositif de masquage (5), permettant de masquer une partie d'une image générée en tête de la séquence par le générateur de caractères (3) et constituée de symboles alphanumériques, de façon à laisser apparaître une combinaison de symboles différente pour chaque enregistreur (6), et affecter ainsi un numéro d'identification différent à chaque vidéocassette enregistrée par les enregistreurs (6).

8. Dispositif selon la revendication 6, pour la mise en oeuvre du procédé selon la revendication 4, caractérisé en ce que l'entrée du dispositif d'incrustation (2) est couplée à la sortie du générateur de caractères (3) par un dispositif de masquage supplémentaire, permettant de masquer une partie d'une image générée par le générateur de caractères (3) et contenant des marques situées en diverses positions sur ses bords.

0107567

1/2

FIG_1

FIG_2

0107567

2/2

# FIG_3

Date
Nom de la société
de duplication
Numéro du Lot
Heure
Titre du film
Nom du producteur
Numéro de Visa

10

a

b
c
d
e

0 0 0
1 1 1
2 2 2
3 3 3
4 4 4
5 5 5
6 6 6
7 7 7
8 8 8
9 9 9

f
g
h

# FIG_4

5

17
MONOSTABLE

18
12 SYN.LIGNE  MONOSTABLE  19 MONOSTABLE
11 SYN.TRAME  20 MONOSTABLE  21 MONOSTABLE  30

22 MONOSTABLE  23 MONOSTABLE

24 MONOSTABLE  25 MONOSTABLE  31  33

26 MONOSTABLE  27 MONOSTABLE

28 MONOSTABLE  29 MONOSTABLE  32

13
14
15

34  35  36

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 288 369 (EMI LTD.) <br><br> * Page 1, lignes 1-10; page 2, ligne 28 - page 6, ligne 24; page 14, lignes 15-28 * <br><br> --- | 1,2,5, 6 | G 11 B 23/28 <br> H 04 N 5/91 |
| Y | EP-A-0 021 971 (QUADRIVIUM TECHNIQUES AVANCEES) <br> * Page 1, lignes 1-21; page 2, ligne 13 - page 3, ligne 24 * <br><br> --- | 1,2,5, 6 | |
| Y | US-A-4 040 099 (COOK) <br><br> * Colonne 3, ligne 22 - colonne 6, ligne 23 * <br><br> --- | 1,2,5, 6 | |
| Y | US-A-4 086 634 (COOK) <br><br> * Colonne 2, lignes 21-58 * <br><br> --- | 1,2,5, 6 | DOMAINES TECHNIQUES RECHERCHES (Int. Cl. 3) |
| Y | GB-A-1 525 292 (EMI LTD.) <br><br> * Page 1, lignes 37-76; page 2, lignes 62-93; page 3, lignes 91-102 * <br><br> --- | 1,2,5, 6 | H 04 N 7 <br> H 04 N 5 <br> G 11 B |
| Y | PATENTS ABSTRACTS OF JAPAN, vol. 5, no. 186 (E-84)[858], 25 novembre 1981 <br> & JP - A - 56 112 185 (MATSUSHITA DENKI SANGYO K.K.) 04-09-1981 * Abrégé * <br><br> ---           -/- | 1,2,5, 6 | |

Le présent rapport de recherche a été établi pour toutes les revendications

| Lieu de la recherche <br> LA HAYE | Date d'achèvement de la recherche <br> 17-01-1984 | Examinateur <br> VERSCHELDEN J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
-------------------------------------------
& : membre de la même famille, document correspondant

OEB Form 1503. 03 82

0107567

Office européen
des brevets

**RAPPORT DE RECHERCHE EUROPEENNE**

Numéro de la demande

EP 83 40 1970

| | **DOCUMENTS CONSIDERES COMME PERTINENTS** | | Page 2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | NEUES AUS DER TECHNIK, no. 1, 15 février 1980, page 1, no. 558, Vogel-Verlag, Würzburg, DE "Videoplatte mit zusätzlicher Information" * Page 1, article en entier *<br><br>--- | 1 | |
| A | US-A-3 913 135 (DAMLAMIAN) * Colonne 1, lignes 1-46 *<br><br>--- | 1 | |
| A | GB-A-2 055 501 (I.V.S. LTD.)<br><br>--- | | |
| A | GB-A-2 050 675 (DIMMERS)<br><br>--- | | |
| A | GB-A-2 067 871 (THE MARCONI COMPANY LTD.)<br><br>----- | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 17-01-1984 | VERSCHELDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82